# EUROPEAN PATENT APPLICATION

(11) **EP 1 947 487 A1**
(43) Date of publication of application: **23.07.2008**
(21) Application number: 06822083.9
(22) Date of filing: 24.10.2006
(51) Int. Cl.: G02B 5/18

(54) **OPTICAL THIN FILM, OPTICAL DEVICE AND METHOD FOR PRODUCING SAME**

(30) Priority: 28.10.2005 JP 2005314173; 01.09.2006 JP 2006238023
(71) Applicant: Sumitomo Electric Industries, Ltd., Osaka-shi, Osaka 541-0041 (JP)
(72) Inventor: ODA, Kazuhiko, Itami-shi, Hyogo 664-8611 (JP); MATSUURA, Takashi, Itami-shi, Hyogo 664-8611 (JP); AKAHANE, Yoshihiro, Itami-shi, Hyogo 664-8611 (JP); USHIRO, Toshihiko, Itami-shi, Hyogo 664-8611 (JP); IMAI, Takahiro, Itami-shi, Hyogo 664-8611 (JP)
(74) Representative: HOFFMANN EITLE
(86) International application number: PCT/JP2006/321103
(87) International publication number: WO 2007/049581

(57) **Abstract**

In an optical thin film of the present invention, a hydrogenated carbon film containing at least carbon and hydrogen as major components is formed on a substrate, and at least one protective layer including one of an oxide film, a nitride film, an oxynitride film, a fluoride film, and a film containing hydrogen and carbon as major components is superposed thereon.

## Description

### TECHNICAL FIELD

The present invention relates to an optical thin film and an optical device that are used in various optical technical fields such as information telecommunication, information recording, image photographing and display, and to a method of manufacturing the same.

### BACKGROUND ART

Conventionally, a hydrogenated carbon film has been used mainly as a coating material for a tool, a mold, a machine part, an electric component, an optical part, or the like, utilizing its mechanical properties and chemical stability. In recent years, the hydrogenated carbon films are used in a wide variety of application fields and the same with various physical properties have been developed suitably for the respective application fields.

For example, Japanese Patent Laying-Open No. 2003-248193 of Patent Document 1 discloses a method of producing a polarizer by irradiating parts of a DLC (diamond-like carbon) film, which is a kind of hydrogenated carbon film, with an energy beam such as an ion beam, an electron beam, a proton beam, an α ray, a neutron beam, a light ray, an X-ray, or a y ray to optically modify the parts of the hydrogenated carbon film. In this case, prescribed parts of the hydrogenated carbon film is irradiated with, e.g., an ion beam such as a helium ion beam or an argon ion beam. Then, the parts of the hydrogenated carbon film, which are irradiated with the ion beam, are modified to have an increased refractive index. On the other hand, parts of the hydrogenated carbon film, which are not irradiated with the ion beam, are not modified and have an unchanged refractive index. Thus, it is possible to produce the polarizer by forming a distribution of the refractive index in the hydrogenated carbon film, utilizing the ion beam irradiation.

Moreover, Japanese Patent Laying-Open No. 2004-20783 of Patent Document 2 discloses a method of producing an optical waveguide by irradiating a part of a similarDLC film with an energy beam to optically modify the part. In this case also, a prescribed region of the hydrogenated carbon film is irradiated with, e.g., an ion beam, to be modified such that the irradiated region has an increased refractive index as compared with the other region. Thus, it is possible to produce the optical waveguide by forming the region having the increased refractive index in the hydrogenated carbon film, utilizing the ion beam irradiation.
Patent Document 1: Japanese Patent Laying-Open No. 2003-248193
Patent Document 2: Japanese Patent Laying-Open No. 2004-20783

### DISCLOSURE OF THE INVENTION

### PROBLEMS TO BE SOLVED BY THE INVENTION

When the hydrogenated carbon film is irradiated with the energy beam as described above, the refractive index thereof increases in the irradiated region. Concerning this phenomenon, since the hydrogen content in the hydrogenated carbon film changes before and after the energy beam irradiation, it may be considered that the energy beam irradiation causes escape of hydrogen atoms from the film and increase in density of the film whereby increasing the refractive index. The detailed mechanism of the increase in refractive index, however, is not yet made clear enough.

If hydrogen atoms escape from the hydrogenated carbon film, defects (dangling bonds) are generated on carbon atoms with which the hydrogen atoms have been bonded, and new counterparts for new bonds are needed in order to repair the defects. When there exist a carbon atom having a defect (dangling bond) and another carbon atom having a defect near each other, it is considered that these carbon atoms will bond with each other at a certain probability so as to be stabilized. When there exists a defect (dangling bond) and no defect near the defect, on the other hand, it is considered that the defect tends to form an unsaturated bond or recombine with hydrogen, oxygen or the like taken from the atmosphere.

Here, since the bond of oxytgen and carbon is stable, it is considered that formation of this bond impedes the increase of the refractive index to be caused by the energy beam irradiation in the hydrogenated carbon film. That is, once the bond of oxygen and carbon is formed, the bond is not easily broken and the modification of the hydrogenated carbon film reaches a saturation level as a result, making it impossible to obtain the desired optical properties. In addition, oxidative decomposition may possibly occur under the existence of oxygen, and a problem of reduced durability of the hydrogenated carbon film may occur because of the oxygen.

Moreover, in the case that the energy beam for the optical modification has a high energy density or the concentration of O₂ or H₂O is high in the atmosphere, the carbon-oxygen reaction and the hydrogen-oxygen reaction are promoted in the hydrogenated carbon film, and thus the film becomes oxidized and vaporizes from its surface in sequence, suffering from a phenomenon in which the surface removal effect of the hydrogenated carbon film is more enhanced than the optical modification effect. Further, in the case that the energy beam for the optical modification has a particularly high energy density, there occurs abrasion of the hydrogenated carbon film.

Furthermore, the optical device formed with the hydrogenated carbon film may also be deteriorated under use because of the oxidation promoted by heat or light.

Objects of the present invention are to prevent the defects generated at the time of the optical modification of the hydrogenated carbon film from recombining with oxygen, to prevent the hydrogenated carbon film from reacting with oxygen and vaporizing at the time of the modification, to prevent the oxidative degradation accelerated by heat and light in the hydrogenated carbon film under use, and the like.

### MEANS FOR SOLVING THE PROBLEMS

In an optical thin film according to an aspect of the present invention, a hydrogenated carbon film containing at least carbon and hydrogen as major components is formed on a substrate, and at least one protective layer including one of an oxide film, hydrogenated carbon film containing at least carbon and hydrogen as major components is formed on a substrate and then a transparent material plate of a thickness not less than 10 µm is joined thereon.

In an optical thin film according to still another aspect of the present invention, a hydrogenated carbon film containing at least carbon and hydrogen as major components is formed on a substrate, and at least one protective layer including one of an oxide film, a nitride film, an oxynitride film, a fluoride film, or a film containing hydrogen and carbon as major components is superposed thereon, and then a transparent material plate of a thickness not less than 10 µm is further joined thereon.

An optical device according to the present invention includes the above-mentioned optical thin film, and the hydrogenated carbon film has a refractive index modulation structure in a direction parallel to its surface.

In a method of manufacturing an optical device according to the present invention, the above-mentioned optical thin film is irradiated in a prescribed pattern with the energy beam including an electromagnetic wave or a corpuscular beam, so as to increase its refractive index in the prescribed pattern. In the method of manufacturing the optical device, it is preferable that the irradiation of the energy beam is performed in an atmosphere substantially not containing oxygen or water, and it is also preferable that the irradiation of the energy beam is performed in a state of the substrate being kept at a temperature higher than 80°C.

### EFFECTS OF THE INVENTION

According to the present invention mentioned above, the defects generated at the time of the optical modification in the hydrogenated carbon film can be prevented from recombining with oxygen, and the hydrogenated carbon film can be prevented from reacting with oxygen to vaporizing at the time of the modification, and it is possible to prevent the oxidative degradation accelerated by heat and light in the hydrogenated carbon film under use.

### BEST MODES FOR CARRYING OUT THE INVENTION

The method of manufacturing the optical thin film and the optical device according to the present invention are described in detail in the following.

### (Hydrogenated carbon film)

First of all, the hydrogenated carbon film, i.e., the starting material in the present invention, is defined. That is, the hydrogenated carbon film herein refers to a film containing hydrogen and carbon as major components. A film obtained by a vapor phase synthesis or a film made of a resin material can be used as such a hydrogenated carbon film.

The hydrogenated carbon film to be obtained by the vapor phase synthesis can be produced by a high frequency plasma CVD (chemical vapor phase deposition) method, for example. In this case, it is possible to use, as a source material in the high frequency plasma CVD, at least one kind of hydrocarbon gases such as methane (CH₄), ethane (C₂H₆), propane (C₃H₈), butane (C₄H₁₀), hexane (C₆H₁₄), octane (C₈H₁₈), acetylene (C₂H₂), benzene (C₆H₆), and cyclohexane (C₆H₁₂).

That is, the hydrogenated carbon film can be formed on a substrate by introducing the above-mentioned hydrocarbon gas up to a pressure in a range of several Pa to several hundreds of Pa in a high frequency plasma CVD apparatus, setting the substrate at a temperature in a range of a room temperature (25°C) to 300°C on a high frequency electrode, and applying a high frequency electric power to this substrate. The hydrogenated carbon film can also be formed with the vapor phase synthesis process such as a cathode arc ion-plating method or a sputtering method, instead of the high frequency plasma CVD method. Note that the hydrogenated carbon film obtained by the vapor phase synthesis has an amorphous structure in which only a halo pattern is observed in an X-ray diffraction or the like.

As the film made of a resin material, it is possible to use a film such as a resin coating film deposited on a substrate by a spin coat method, a dipping method, a spray coat method or the like, or an independent resin film with no substrate.

The composition of such hydrogenated carbon films may have an atomic ration of (hydrogen)/(hydrogen + carbon) in a range more than 0.4 and less than 0.7. In particular, the atomic ratio is preferably in a range more than 0.45 and less than 0.65, and more preferably in a range more than 0.50 and less than 0.60. The hydrogenated carbon film in such a composition range is highly transparent and can have an increased variation range of the optical and physical properties that are modified by the energy beam irradiation.

The refractive index of the hydrogenated carbon film before the modification is preferably in a range more than 1.50 and less than 1.70, and more preferably in a range more than 1.52 and less than 1.60. In particular, a hydrogenated carbon film that has a refractive index smaller than 1.57 before the modification is useful because a large refractive index difference is easily obtained after the modification.

The content of H element can be determined by HFS (hydrogen forward scattering), and its ratio with respect to other elements can also be determined by combining HFS with RBS (Rutherford back scattering). For example, the composition ratio of various constitutional elements can be determined by irradiating the thin film to be analyzed with helium ions and detecting energy spectra of the helium ions scattered backward and hydrogen atoms scattered forward using a detector. However, since hydrogen atoms are caused to recoil out of the film by the helium ion in the HFS method, the content of hydrogen in the film decreases over the detection time. Therefore, a method is employed in which the change in content of detected hydrogen is plotted over time and the initial content of hydrogen is determined by extrapolation.

Note that although either of the film obtained by the vapor phase synthesis and the film made of a resin material can be optically modified by the energy beam irradiation, the film obtained by the vapor phase synthesis tends to be modified more easily.

### (Protective film)

Next, explanation is given on the protective layer formed on the hydrogenated carbon film and composed of an oxide film, a nitride film, an oxynitride film, a fluoride film, or a film containing hydrogen and carbon as major components.

This protective layer is for preventing the hydrogenated carbon film from reacting with oxygen or water at the time of the optical modification or under use of the film. The protective layer is expected to serve as a barrier film against oxygen and water as well as to show an effect of inhibiting the escape of elements and the ablation at the hydrogenated carbon film surface. However, it is considered that this protective film has a relatively low barrier effect against a hydrogen molecule of a small molecular size or a hydrogen atom of a small atomic size.

More specifically, a silicon oxide film, a silicon oxynitride film, a silicon nitride film, an aluminum oxide film, a titanium oxide film, a tantalum oxide film, a magnesium fluoride film, a hydrogenated carbon film with a lower hydrogen content than a underlying hydrogenated carbon film, a hydrogenated carbon film containing silicon and oxygen as well, or a polymer film is preferable as the protective layer. Each of these films has a high barrier character against oxygen and water as well as high transparency when included in the optical device. In addition, it is desirable that there exist no or very few pinholes and cracks in the protective film.

A vapor phase synthesis process such as plasma CVD, sputtering, vacuum evaporation, or ion beam assisted vacuum evaporation is applicable to formation of the protective film. Moreover, as for some polymers, the protective film can be formed by a spin coat method.

More specifically, the protective silicon oxide film, the protective aluminum oxide film and the like can be synthesized by any one of plasma CVD, sputtering, vacuum evaporation, ion beam assisted vacuum evaporation and the like. The protective silicon oxynitride film, the protective silicon nitride film and the like can mainly be synthesized by the plasma CVD method and the like. The protective titanium oxide film, the protective tantalum oxide film, the protective magnesium fluoride film and the like can mainly be synthesized by sputtering, vacuum evaporation, ion beam assisted vacuum evaporation and the like.

Moreover, the protective hydrogenated carbon film having a smaller content of hydrogen than the underlying layer can be obtained with the above-mentioned plasma CVD method by increasing the high frequency power or decreasing the gas pressure as compared to the case of formation of the underlying hydrogenated carbon film.

The protective hydrogenated carbon film containing silicon and oxygen can be obtained by introducing siloxane and the like as a source gas in a similar method as in the case of formation of the underlying hydrogenated carbon film. Siloxane is a generic term of materials each of which includes a periodic -Si-O- structure in its atomic framework and also includes a structure in which a hydrogen or hydrocarbon type group is attached to a side chain coming out of a silicone atom (e.g., polydimethylsiloxane [(CH₃)₂SiO]ₙ, polydiphenylsiloxane [(C₆H₅)₂SiO]ₙ, polymethylphenylsiloxane [(CH₃) (H₆H₅)SiO]ₙ, polyhydrogenmethylsiloxane [(H)(CH₃)SiO]ₙ).

When the protective film is formed before the optical modification, it can provide the protective effect both at the time of the modification and under use of the hydrogenated carbon film as an optical device. However, it is also possible not to use the protective film at the time of the modification but to form it after the modification in order to improve only the durability of the hydrogenated carbon film under use as an optical device. In the case that the protective film is formed before the modification, some restrictions arise in the material and thickness of the protective film in order not to hinder the modification. In the case that the protective film is formed after the modification, on the other hand, such restrictions do not arise. Note that detailed explanation will later be given on the protective film thickness in the case of forming the protective film before the modification of the hydrogenated carbon film.

In the case of forming the protective film before the modification, it is generally preferable to form the protective film continuously without taking the underlying hydrogenated carbon film out to the air from the film deposition apparatus. This is because defects such as pinholes are liable to be formed in the protective film if the underlying hydrogenated carbon film is taken out to the air. However, this does not apply to the case that a coating of a polymer or the like is formed with a spin coat method or the like.

### (Transparent material plate)

The transparent material plate joined on the hydrogenated carbon film can be anything with no particular restriction, as long as it can shield oxygen and water and transmit light. Generally, a glass-type material is preferable for the transparent material plate. This is because the glass-type material is relatively inexpensive and is excellent in the shielding effect against oxygen and water. Moreover, a resin sheet coated with an inorganic transparent material can also be used as the transparent material plate.

The transparent material plate has preferably a thickness not less than 10 µm. This is because the transparent material plate of such a thickness has a high shielding effect against oxygen and water and is easy to handle.

The transparent material plate is affixed directly onto the hydrogenated carbon film, or onto the protective film on the hydrogenated carbon film, with an adhesive such as of a thermoset type, an ultraviolet cure type, a visible light cure type or the like. It is preferable that this adhesive used for the joining also has a low permeability to oxygen and water, and it is also preferable that the thickness of the adhesive layer can be made thin.

The transparent material plate, as well as the protective film, can provide the protective effect both at the time of the modification and under use of the hydrogenated carbon film as an optical device if being joined before the modification. However, it is generally preferred to join the transparent material plate after the modification only to improve the durability of the hydrogenated carbon film being used as an optical device, because the transparent material plate may not transmit the energy beam or the plate itself may be deteriorated with the energy beam.

Note that the protective effect can be further enhanced with using such a transparent material plate together with the protective film.

### (Optical modification)

For the optical modification of the hydrogenated carbon film, it is possible to use a method of irradiating the film with an energy beam including an electromagnetic wave such as an X-ray, a gamma ray, a laser light or a lamp light, or a corpuscular beam such as an electron beam, an ion beam or a neutron beam.

In the modification by the electromagnetic wave, it is possible to use any of the X-ray, the gamma ray, the laser light, the lamp light, and the like, but in particular, an electromagnetic wave having a longer wavelength than an ultraviolet ray can be usable under the atmospheric pressure and is easy to handle. More specifically, a wavelength longer than 150 nm and shorter than 700 nm is preferable. The shorter the wavelength is, the higher the degree of the optical modification of the hydrogenated carbon film can be. The longer the wavelength is, the deeper the modification depth can be. An electromagnetic wave in a wavelength range more than 190 nm and less than 400 nm is more preferable. This is because, in this wavelength range, the modification effect and the modification depth are well balanced and a stable light source of that wavelength range can be obtained.

Specifically as the light source of such a wavelength, it is possible to use any of lasers such as various excimer lasers (ArF, KrF, XeCl, XeF), an F₂ laser, an YAG (yttrium aluminum garnet) third harmonic wave and an YAG forth harmonic wave, or any of high luminance lamps such as various mercury lamps, a xenon lamp and a metal halide lamp.

In the modification by the electromagnetic wave, the thickness of the protective film is preferably thicker than 0.02 µm and thinner than 10 µm. This is because the barrier effect against oxygen and water is not sufficient if the thickness is not more than 0.02 µm, and cracks tend to occur in the protective layer if the thickness is not less than 10 µm. The minimum thickness is more preferably thicker than 0.05 µm, and still more preferably thicker than 0.1 µm. The maximum thickness is more preferably less than 5 µm, and still more preferably less than 3 µm.

In the modification by the corpuscular beam, on the other hand, it is possible to use any of the electron beam, the ion beam or the neutron beam. However, since the electron beam tends to be scattered and spread in a solid, it is not easy to perform the optical modification in a narrow and deep pattern by the electron beam. The neutron beam is not easy to handle because its energy level and density are not highly controllable. The ion beam is excellent in controllability of its energy level and density, and it is suitable for the modification in a narrow and deep pattern to use ions of a relatively lightweight element such as hydrogen or helium.

In the modification by the corpuscular beam, the thickness of the protective film is preferably thicker than 0.02 µm and thinner than 1 µm. This is because the barrier effect against oxygen and water is not sufficient if the thickness is not more than 0.02 µm, and the corpuscular beam may not reach the hydrogenated carbon film if the thickness is not less than 1 µm. The minimum thickness is more preferably thicker than 0.05 µm, and still more preferably thicker than 0.1 µm. The maximum thickness is more preferably less than 0.5 µm, and still more preferably less than 0.2 µm.

Moreover, the protective film should have a thickness also in a certain preferable range in relation to its extinction coefficient with respect to the wavelength band in which the optical device is used. This is because the optical transmittance of the film depends on the film's thickness and extinction coefficient. The extinction coefficient of the protective film is preferably less than 5 x 10⁻³, more preferably less than 1 x 10⁻³, and still more preferably less than 5 X 10⁻⁴. Generally, in relation to the internal transmittance of the protective film, the film thickness is preferably such that the internal transmittance larger than 80 % can be obtained, more preferably such that the internal transmittance larger than 90 % can be obtained, and still more preferably such that the internal transmittance larger than 99 % can be obtained.

On the other hand, in the case of using irradiation of light (electromagnetic wave) in the visible to ultraviolet range for the optical modification of the hydrogenated carbon film, in relation to the transmittance of the protective film with respect to the wavelength, the film thickness is preferably such that the transmittance larger than 40 % can be obtained, more preferably such that the internal transmittance larger than 60 % can be obtained, and still more preferably such that the transmittance larger than 80 % can be obtained.

### (Modification atmosphere)

The modification of the hydrogenated carbon film by the energy beam irradiation may be subjected to much less restriction in either of the air and a liquid owing to the effect of the protective film in the present invention, but it is more preferable to perform the modification under an atmosphere substantially not containing oxygen or water. In such an atmosphere, even if the protective film includes pinholes, oxidation through the pinholes can be inhibited, and moreover, avoidance of oxidation can be expected even if the protective film itself has a lower gas barrier effect.

Specifically, it is preferable to perform the modification under an atmosphere of a reduced pressure less than 100 Pa or a vacuum, for example. That is, by using the atmosphere of the reduced pressure or the vacuum, the atmospheric concentration of O₂ and H₂O acting as an oxygen atom source is suppressed lower so that oxygen is less incorporated into the hydrogenated carbon film at the time of the modification. The pressure of the atmosphere is more preferably less than 5 x 10⁻³ Pa, and still more preferably less than 1 x 10⁻⁵ Pa.

On the other hand, instead of bringing the entire atmosphere to a reduced pressure or a vacuum, it will do to replace the same with a gas not containing O₂ or H₂O. In this case, it is preferable for the sum of partial pressures of O₂ and H₂O to be less than 0.1 % of the total pressure of the atmosphere. That is, when the atmosphere is replaced with, e.g., Ar gas of 1 atm (approximately 100 kPa), the sum of partial pressures of O₂ and H₂O in the atmosphere is preferably less than approximately 100 Pa. The sum of partial pressures of O₂ and H₂O in the atmosphere is more preferably less than 100 ppm, and still more preferably less than 10 ppm. The replacement gas to be used is preferably an inert gas such as He, Ne, Ar, Kr, Xe or N₂ gas. At the time of the replacement, it is most convenient in the process that the total pressure of the gas is in the vicinity of the atmospheric pressure, e.g., more than 0.95 atm and less than 1.05 atm. However, it is possible to adjust the replacement gas pressure to a vacuum, a reduced pressure, or an increased pressure depending on the purpose.

### (Modification temperature)

The substrate temperature at the time of irradiating the hydrogenated carbon film with the energy beam for the modification can be an arbitrary temperature. For example, the modification at the substrate temperature of a room temperature state needs no temperature control device and is preferable from a viewpoint of simplification of the process and reduction in cost. Practically, however, it is likely that the substrate temperature in the vicinity of the modified portion tends to become higher than the room temperature, because of the energy beam irradiation. Since the substrate temperature at the time of the energy beam irradiation influences the physical properties of the hydrogenated carbon film, it is preferable to positively adjust the substrate temperature to increase the controllability of the modification.

More specifically, generally speaking, the higher the temperature of the hydrogenated carbon film at the time of the modification is held, the higher the modification rate becomes. On the other hand, in the case that the protective layer is provided on the hydrogenated carbon film surface as in the present invention, the modification rate of the hydrogenated carbon film tends to become slower. When such a protective layer is provided, therefore, a method is effective in which the modification rate is increased by raising the substrate temperature. Specifically, the substrate temperature is preferably higher than 80°C and lower than 400°C, more preferably higher than 100°C and lower than 250°C, and still more preferably higher than 120°C and lower than 220°C.

However, although the high substrate temperature is preferable from a viewpoint of the increased modification rate, adverse effects will be caused if the substrate temperature is too high, from a viewpoint of coloring of the hydrogenated carbon film or the controllability of the modification. Incidentally, other than heating by a usual heater, heating by infrared radiation containing light of a wavelength not less than 3 µm is also effective in heating the substrate.

### (Refractive index modulation)

The refractive index of the hydrogenated carbon film can be increased by not less than 0.3 depending on the irradiation amount of the energy beam and can be increased by not less than 0.5 depending on the technique. Furthermore, by irradiating a pattern of local regions of the hydrogenated carbon film with the energy beam, it is possible to make the regions of the film have different optical physical properties such as a refractive index so as to obtain an optical device. For the energy beam irradiation of the local regions, it is possible to use a mask, scanning a convergent beam or interference exposure. With one of these method, it is possible to vary (modulate) the refractive index in a prescribed pattern in the hydrogenated carbon film, so as to produce a waveguide, a diffractive optical element or the like.

### (Optical device)

Since the optical device according to the present invention can cover from the infrared light range to the visible light range or even to the near-ultraviolet light range, it is suitable for a wide range of application. Moreover, since the optical device according to the present invention is formed with the thin film and is of a refractive index modulation type, it is suitable for making the device compact and thin. In addition, the optical device according to the present invention is applicable to various optical devices for optical communications, optical devices in a optical processing device such as a laser, optical systems in various image display devices or optical recording devices, optical devices in optical measurement apparatuses, and the like.

As for the function of the diffractive optical element according to the present invention, specifically, it is possible to obtain a wavelength integration/division function, a power integration/division function, a polarization integration/division function, a condensing function, a beam shaping function, or the like. The wavelength integration/division function is applicable to a wavelength integrator/divider in optical communication, an optical element for RGB (red, green, and blue) integration/division in an image display device and the like. The power integration/division function is applicable to a multi-beam machining in a laser machining apparatus, an optical coupler for optical communication and the like. The polarization integration/division function is applicable to a splitter for TE wave and TM wave in optical communication, a polarizer, an analyzer, a polarizing plate for liquid crystal, and the like. The condensing function is applicable to various lenses, a micro lens array and the like in a display device or a recording device. The beam shaping function is applicable to a beam homogenizer in a machining apparatus, a display device or the like.

### Example 1

In example 1 according to the present invention, sample 1 A was prepared by forming a hydrogenated carbon film having an [H]/[H+C] ratio of 0.55, an oxygen concentration less than 1 at%, a refractive index of 1.54 and a thickness of 1.5 µm on a quartz substrate. Samples 1B and 1C were prepared by forming a protective SiO₂ film of 0.1 µm thickness on sample 1A by a magnetron sputtering method.

Samples 1A and 1B were placed in the air, and sample 1C was placed in Ar at the atmospheric pressure. These samples in this state were irradiated with an excimer laser (ArF : wavelength of 193 nm) at a power of 80 W for 40 minutes. As a result, the refractive index of samples 1A, 1B and 1C increased to 1.62, 1.68 and 1.69, respectively.

The oxygen content in the hydrogenated carbon film measured by XPS (X-ray photoelectron spectroscopy) after the laser irradiation was as high as 7 at% in sample 1A, while less than 1 at% in samples 1B and 1C. Moreover, the film thickness of sample 1A was notably reduced to 0.2 - 0.5 µm, while the film thickness of samples 1B and 1C each including the SiO₂ film was 1.4 µm and 1.5 µm, respectively, indicating little reduction in thickness of the hydrogenated carbon film.

Furthermore, samples 1D, 1E and 1F were prepared by joining a glass plate of 0.05 mm thickness onto samples 1A, 1B and 1C with a visible light cure type of adhesive, respectively. Samples 1 A - 1 F were irradiated for 500 hours with lights having wavelengths not more than 400 nm which were extracted and condensed from lights of a 100 W xenon lamp. Thereafter, samples 1A-1F were examined for their transmittance change for a blue light of 460 nm wavelength. As a result, there was a change of 7 % in sample 1A, a change of about 0.5 % in samples 1B and 1C, and a change less than 0.5 % in samples 1D, 1E and 1F. This means that the sample including the protective SiO₂ film and the sample further including the thin glass plate joined thereon were less degraded in their transmittance.

### Example 2

In example 2 according to the present invention, sample 2A was prepared by forming a hydrogenated carbon film having an [H]/[H+C] ratio of 0.52, an oxygen concentration less than 1 at%, a refractive index of 1.56 and a thickness of 2.0 µm on a glass substrate. Samples 2B and 2C were prepared forming a protective Si-O-C-H film of 0.3 µm thickness on sample 2A by a plasma CVD method.

Samples 2A and 2B were placed in the air, and sample 2C was placed in Ar at the atmospheric pressure. These samples in this state were irradiated with an excimer laser (KrF : wavelength of 248 nm) at a power of 220 W for 20 minutes. As a result, the hydrogenated carbon film disappeared completely in sample 2A, while the film thickness including the protective film was 2.1 µm in either of samples 2B and 2C. The refractive index in samples 2B and 2C increased to 1.72 and 1.74, respectively. Moreover, the oxygen content in the hydrogenated carbon film was 3.5 at% and less than 1 at% in samples 2B and 2C, respectively.

Furthermore, samples 2D and 2E were prepared by joining a glass plate of 0.1 mm thickness onto samples 2B and 2C with an ultraviolet curing type of adhesive, respectively. Samples 2B - 2E were irradiated for 200 hours with lights having wavelengths not more than 400 nm which were extracted and condensed from lights of a 200 W mercury lamp. Thereafter, samples 2B - 2E were examined for their transmittance change for a blue light of 460 nm wavelength. As a result, there was a change of 0.5 - 0.8% in samples 2B and 2C, and a change less than 0.5% in samples 2D and 2E.

### Example 3

In example 3 according to the present invention, sample 3A was prepared by forming a hydrogenated carbon film having an [H]/[H+C] ratio of 0.57, an oxygen concentration less than 1 at%, a refractive index of 1.53 and a thickness of 1.0 µm on a glass substrate. Sample 3B was prepared by forming a protective silicon oxynitride film of 0.1 µm thickness on sample 3A.

He ions were injected into samples 3A and 3B at a rate of 8 ×10⁻⁶ ions/cm² in a vacuum of 3 x 10⁻⁴ Pa. As a result, the refractive index of sample 2A increased to 1.82, and the refractive index of sample 2B increased to 1.83. Then, the oxygen content in the hydrogenated carbon film was 2.5 at% in sample 3A, while it was less than 1 at% in sample 3B. Moreover, the thickness of the hydrogenated carbon film decreased to 0.85 µm in sample 3A, while the film thickness including the protective film was 1.0 µm in sample 3B.

Furthermore, samples 3C and 3D were prepared by joining a glass plate of 0.2 mm thickness onto samples 3A and 3B with a thermoset type of adhesive, respectively. Samples 3A - 3D were irradiated for 200 hours with lights having wavelengths not more than 400 nm which were extracted and condensed from lights of a 200 W mercury lamp. Thereafter, samples 3A-3E were examined for their transmittance change for a blue light of 460 nm wavelength. As a result, there was a change of 9 % in sample 3A, a change of about 0.8 % in sample 3B, and a change less than 0.5 % in samples 3C and 3D.

### Example 4

In example 4 according to the present invention, a quartz substrate was set on a substrate electrode in a film deposition apparatus, and then cyclohexane was introduced up to a pressure of 67 Pa to deposit a hydrogenated carbon film of 1.2 µm thickness in a high frequency plasma CVD method at a frequency of 13.56 MHz and a power of 0.5 W/cm². Thereafter, trimethyldisiloxane was introduced up to a pressure of 13 Pa in the film deposition apparatus to form a protective Si-O-C-H film of 0.3 µm thickness on the hydrogenated carbon film in the high frequency plasma CVD method at a frequency of 13.56 MHz and a power of 0.2 W/cm².

Furthermore, the refractive index modulation structure was formed with a pattern in the hydrogenated carbon film by interference exposure with an excimer laser (KrF) using a phase grating mask of quartz that includes concavities and convexities with 1 µm periodicity. The atmosphere at the time of the exposure was an N₂ gas atmosphere of 1 atm with purity not less than 99.9 %. Thereafter, a quartz plate of 0.1 mm thickness was affixed onto the protective Si-O-C-H film with a visible light cure type of adhesive.

It was confirmed that the optical device obtained in this way according to example 4 served as a diffraction grating. It was also confirmed that this optical device caused no change in diffraction efficiency, diffraction angle and the like after a year of its use.

Incidentally, an optical device as a comparative example was produced in a similar way as in example 4 except that either of the protective film and the quartz plate was not provided. Although this optical device as a comparative example served as a diffraction grating, its diffraction efficiency dropped by 20% after a year of its use.

### Example 5

In example 5 according to the present invention, a quartz substrate was set onto a substrate electrode in a film deposition apparatus, and then cyclohexane was introduced up to a pressure of 100 Pa to deposit a hydrogenated carbon film of 1.5 µm thickness in a high frequency plasma CVD method at a frequency of 13.56 MHz and a power of 0.3 W/cm². Thereafter, a protective SiO₂ film of 0.5 µm thickness was formed on the hydrogenated carbon film by a sputtering method.

Subsequently, a gold mask was formed with a pattern on the protective SiO₂ film by a liftoff method, and the refractive index of the hydrogenated carbon film was modulated by exposure to synchrotron radiation (energy of 50 - 3000 eV), and then the gold mask was removed by etching. In this way, the optical device of example 5 was produced to serve as a diffraction lens of a refractive index modulation type having a condensing function for visible light. This optical device showed no change in the condensing property and the like even after a year of its use.

Incidentally, an optical device as a comparative example was produced in a similar way as in example 5 except that the protective SiO₂ film was not provided. Although the optical device as a comparative example served as a lens, its focal distance changed after a year of its use.

### Example 6

In example 6 according to the present invention, there were formed a hydrogenated carbon film having an [H]/[H+C] ratio of 0.56, an oxygen concentration less than 1 at%, a refractive index of 1.57 and a thickness of 1.5 µm on a glass substrate, using methane as a source material in a high frequency plasma CVD method. A protective Si-O-C-H film of 1.5 µm thickness was formed on the hydrogenated carbon film by the plasma CVD method to prepare samples 6A, 6B and 6C. These samples were irradiated in an N₂ gas atmosphere of 1 atm with an excimer laser (KrF : wavelength of 248 nm) at a power of 10 mW /mm² for 20 minutes.

At the time of the irradiation, the substrate temperature of sample 6A was controlled to 20°C by a water-cooled holder, and the substrate temperature of sample 6B was controlled to 200°C by a holder including a thermocouple and a heater, and the substrate temperature of sample 6C was controlled to 180°C by heating with infrared rays containing far-infrared rays of wavelengths not less than 3 µm and with a radiation thermometer. As a result, the refractive index in samples 6A, 6B, and 6C increased to 1.58, 1.72 and 1.74, respectively. Note that the oxygen content in any of samples 6A, 6B and 6C was less than 1 at%.

### Example 7

In example 7 according to the present invention, a quartz substrate was set onto a substrate electrode in a film deposition apparatus, and then cyclohexane was introduced up to a pressure of 60 Pa to deposit a hydrogenated carbon film of 1.4 µm thickness in a plasma CVD method utilizing a high frequency power of 0.4 W/cm² at a frequency of 13.56 MHz. Subsequently, trimethyldisiloxane was introduced up to a pressure of 10 Pa in the film deposition appratus, and a protective Si-O-C-H film of 1.0 µm thickness was formed on the hydrogenated carbon film by the plasma CVD method utilizing a high frequency power 0.15 W/cm² at a frequency of 13.56 MHz.

Thereafter, the refractive index modulation structure was formed with a pattern in the hydrogenated carbon film by interference exposure utilizing an excimer laser (KrF) and a quartz mask (phase grating mask) that includes concavities and convexities with 0.55 µm periodicity. At the time of the exposure, N₂ gas of purity not less than 99.9% was set to 1 atm as the atmosphere, and the quartz substrate was controlled to 180°C by temperature adjustment with a substrate holder including a heater and a thermocouple. Subsequently, a quartz plate of 0.2 mm thickness was affixed onto the protective Si-O-C-H film with a visible light cure type of adhesive.

It was confirmed that the optical device obtained in this way according to example 7 served as a diffraction grating. It was also confirmed that this optical device caused no change in diffraction efficiency, diffraction angle and the like even after a year of its use.

Incidentally, an optical device as a comparative example was produced in a similar way as in example 7 except that either of the protective film and the quartz plate was not provided. Although this optical device as a comparative example served as a diffraction grating, its diffraction efficiency dropped by 50% after a year of its use.

### INDUSTRIAL APPLICABILITY

As described above, according to the present invention, it is possible to provide a stable optical thin film that is hardly deteriorated even after receiving energy beam irradiation, and also possible to improve stability of an optical device produced through energy beam irradiation of the optical thin film.

## Claims

1. An optical thin film comprising a hydrogenated carbon film containing at least carbon and hydrogen as major components deposited on a substrate, and at least one protective layer superposed thereon and including one of an oxide film, a nitride film, an oxynitride film, a fluoride film, and a film containing hydrogen and carbon as major components.

2. The optical thin film according to claim 1, wherein a transparent material plate of a thickness not less than 10 µm is joined on said protective layer.

3. An optical device comprising the optical thin film of claim 1, wherein said hydrogenated carbon film has a refractive index modulation structure in a direction parallel to its surface.

4. A method of manufacturing an optical device, wherein the optical thin film of claim 1 is irradiated in a prescribed pattern with an energy beam including an electromagnetic wave or a corpuscular beam, so as to increase its refractive index in the prescribed pattern.

5. The method of manufacturing the optical device according to claim 4, wherein the irradiation of said energy beam is performed in an atmosphere substantially not containing oxygen or water.

6. The method of manufacturing the optical device according to claim 4, wherein the irradiation of said energy beam is performed in a state of said substrate being kept at a temperature higher than 80°C.

7. An optical thin film comprising a hydrogenated carbon film containing hydrogen and carbon as major components deposited on a substrate, and a transparent material plate of a thickness not less than 10 µm joined on the hydrogenated carbon film.

8. An optical device comprising the optical thin film of claim 7, wherein said hydrogenated carbon film having a refractive index modulation structure in a direction parallel to its surface.

9. A method of manufacturing an optical device, wherein the optical thin film of claim 7 is irradiated in a prescribed pattern with an energy beam including an electromagnetic wave or a corpuscular beam, so as to increase its refractive index in the prescribed pattern.

10. The method of manufacturing the optical device according to claim 9, wherein the irradiation of said energy beam is performed in an atmosphere substantially containing no oxygen or no water.

11. The method of manufacturing the optical device according to claim 9, wherein the irradiation of said energy beam is performed in a state of said substrate being kept at a temperature higher than 80°C.
